# EUROPEAN PATENT APPLICATION

(11) **EP 4 360 902 A1**
(43) Date of publication of application: **01.05.2024**
(21) Application number: 22204629.4
(22) Date of filing: 31.10.2022
(51) Int. Cl.: B42F 7/08, G11B 33/04

(54) **DATA CARRIER REPOSITORY**

(71) Applicant: Ceramic Data Solutions GmbH, 4810 Gmunden (AT)
(72) Inventor: Pflaum, Christian, 82347 Bernried (DE); Kunze, Martin, 4810 Gmunden (AT)
(74) Representative: Vossius & Partner Patentanwälte Rechtsanwälte mbB

(57) **Abstract**

**The present invention relates to a repository for ceramic data carriers.**

## Description

The present invention relates to a repository for ceramic data carriers and to a method for storing a ceramic data carrier in such a repository.

The applicant of the present invention has developed ceramic data carriers which are, e.g., described in EP 3 779 987 B1. These data carriers are suitable for long-term storage of information. While these ceramic data carriers are sufficiently robust that they can simply be stacked on top of each other, it is difficult to access a specific data carrier, for example for reading out information from said data carrier, within such a stack.

It is therefore an object of the present invention to provide a repository for ceramic data carriers which allows for easy access to each and every data carrier stored in said repository and which, at the same time, minimizes storage space.

This object is achieved with a repository for ceramic data carriers according to claim 1.

Said repository comprises a bottom element, a top element and at least two side-elements extending between the bottom element and the top element, wherein each of the side-elements comprises outwardly oriented folds and inwardly oriented folds allowing for a compressed storage state and an expanded working state of the side-elements.

One or more ceramic data carriers may be removably stored in said repository by arranging them between opposing folds of the side-elements so as to support each data carrier between two opposing folds. If the side-elements are compressed in their storage state, each data carrier is sandwiched between two upper folds and two lower folds and, if the repository is completely filled, each pair of opposing folds is sandwiched between adjacent ceramic data carriers. Thus, the height of the completely filled repository is, apart from the thickness of the top and bottom elements, defined by the thickness of the data carrier and the thickness of the folds. If the thickness of the material of the side-elements is substantially smaller than the thickness of a data carrier, the height of such repository will not be much larger than the height of a simple stack of data carriers.

However, if one wishes to access one or more data carriers stored within the repository, one may simply pull apart the top and bottom elements of the repository in order to achieve the expanded working state of the side-elements. In this expanded working state, the distance between adjacent data carriers is sufficiently larger than their distance in the compressed work storage state. Due to this enlarged distance a single ceramic data carrier may be simply and reliably gripped either manually or by means of a robot.

Due to the sequence of outwardly and inwardly oriented folds, the side-elements of the repository have a bellows-like or concertina-type shape, which allows for compression and expansion. Preferably, each side-element has the same number of folds and the outwardly and inwardly oriented folds of each side element are arranged in such a manner that pairs of outwardly oriented folds each define a pair of opposing folds on one height and pairs of inwardly oriented folds each define a pair of opposing folds on one height. This will allow for supporting each data carrier in a plane parallel to the bottom element. While the outwardly and inwardly oriented folds are preferably stacked perfectly on top of each other, respectively, this is not necessarily required.

While each fold preferably defines a sharp edge, the folds may also be rounded or have another shape having, for example, a polygonal cross-section.

Preferably, the side-elements can be repeatedly transferred from the compressed storage state into the expanded working state and vice versa. It is thus preferred that expansion and compression of the side-elements does not lead to plastic deformation of the side-elements.

Preferably, the repository further comprises a retainer for receiving the side-elements in their compressed storage state. The retainer preferably has at least two side walls covering the side-elements in their compressed storage state. Preferably, the retainer has four side walls encompassing the side-elements in their compressed storage state. The retainer may have a bottom and/or a cover wherein the lower end of each side wall is connected to the bottom of the retainer and/or an upper end of each side wall is connected to the cover of the retainer. The bottom element is preferably attached to or integral with the bottom of the retainer and/or the top element is preferably attached to or integral with the cover of the retainer. Preferably, the retainer completely surrounds the side-elements in their compressed storage state. The retainer may further have a closure for locking the side-elements in their compressed storage state. The closure may, e.g., comprise a ledge mechanism, a pneumatic closing mechanism comprising, e.g, a valve or a magnet.

Preferably, the thickness of the material forming the side-elements is between 10 µm and 100 µm, more preferably between 15 µm and 50 µm and most preferably between 20 µm and 30 µm.

Preferably, the material forming the side-elements comprises one or a combination of metal, steel, stainless steel, plastics, polycarbonate, fabric, and paper.

Preferably, each of the side-elements comprises at least 20, more preferably at least 40, even more preferably at least 60, even more preferably at least 80 and most preferably at least 100 folds (inwardly and outwardly oriented in total).

Preferably, at least some, preferably all, of the inwardly oriented folds are connected to each other by respective support elements. The support elements may consist of the same material as the cited elements.

The repository preferably further comprises one or more ceramic data carriers movably stored in the repository. Preferably, each of the one or more ceramic data carriers is arranged between and supported by two opposing folds of the side-elements. The ratio between the thickness of each ceramic data carrier and the thickness of the material forming the side-elements is preferably at least 4, more preferably at least 6, even more preferably at least 8. The maximum distance between two opposing outwardly extending folds defines a first length and the width of the ceramic data carrier defines a second length, wherein the ration between the first length and the second length is preferably at least 1.02, more preferably 1.05 and most preferably at least 1.1. The maximum distance between two opposing outwardly oriented folds defines a first length and a distance between the tip of an outwardly extending fold and the tip of an adjacent inwardly extending fold in the compressed storage state defines a second length, wherein the ratio between the first length and the second length is preferably at least 2, more preferably at least 5, even more preferably at least 8 and most preferably at least 10 and/or wherein the ratio between the first length and the second length is at most 40, more preferably at least at most 30, even more preferably at most 20 and most preferably at most 15.

The repository has a spring constant, wherein the spring constant is preferably between 0.1 N/m and 10 N/m, more preferably between 0.2 N/m and 5 N/m, even more preferably between 0.5 N/m and 2 N/m and most preferably between 0.8 N/m and 1.2 N/m.

The present invention further relates to a method for storing a ceramic data carrier in the repository as described above. The method comprises expanding the side-elements from their compressed storage state into the expanded working state; placing a ceramic data carrier between two opposing folds of the side-elements such that the ceramic data carrier is supported by the two opposing folds of the side-elements; and compressing the side-elements from their expanded working state into their compressed storage state, wherein the ceramic data carrier remains to be supported by the two opposing folds of the side-elements.

The method may further comprise again expanding the side-elements on their compressed storage state into their expanded working state; removing a ceramic data carrier from the repository; and again compressing the side-elements from their expanded working state into their compressed storage state. The method may further comprise manipulating the ceramic data carrier or reading out data from the ceramic data carrier; again expanding the side-elements from their compressed storage state into the expanded working state; returning the manipulated or read-out ceramic data carrier between two opposing folds of the side-elements, such that the ceramic data carrier is supported by the two opposing folds of the side-elements; and again compressing the side-elements from their expanded working state into their compressed storage state.

The method may further comprise, before expanding the side-elements from their compressed storage state into their expanded working state, placing the repository into the guide which stabilizes the side-elements during expansion.

The method may further comprise, before placing or returning the ceramic data carrier between two opposing folds of the side-elements and/or before removing a ceramic data carrier from the repository, pulling the two side-elements apart from each other, preferably by means of a magnet.

The present invention further relates to the following aspects:
1. A repository (1) for ceramic data carriers (2), the repository (1) comprising a bottom element (3), a top element (4) and at least two side-elements (5a, 5b, 5c) extending between the bottom element (3) and the top element (4), wherein each of the side-elements (5a, 5b, 5c) comprises outwardly oriented folds (6) and inwardly oriented folds (7) allowing for a compressed storage state and an expanded working state of the side-elements (5a, 5b, 5c).
2. The repository of aspect 1, wherein the side-elements (5a, 5b, 5c) can be repeatedly transferred from their compressed storage state into their expanded working state and vice versa.
3. The repository of aspect 1 or 2, wherein the repository (1) further comprises a retainer (10) for receiving the side-elements (5a, 5b, 5c) in their compressed storage state.
4. The repository of aspect 3, wherein the retainer (10) has at least two side-walls (11a, 11b) covering the side-elements (5a, 5b, 5c) in their compressed storage state.
5. The repository of aspect 3 or 4, wherein the retainer has four side-walls (11a, 11b, 11c, 11d) encompassing the side-elements (5a, 5b, 5c) in their compressed storage state.
6. The repository of any of aspects 3 to 5, wherein the retainer (10) has a bottom (12) and/or a cover (13) and wherein a lower end (9) of each side-wall (5a, 5b, 5c) is connected to the bottom (12) of the retainer (10) and/or an upper end (8) of each side-wall (5a, 5b, 5c) is connected to the cover (13) of the retainer (10).
7. The repository of aspect 6, wherein the bottom element (3) is attached to or integral with the bottom (12) of the retainer (10) and/or wherein the top element (4) is attached to or integral with the cover (13) of the retainer (10).
8. The repository of any of aspects 3 to 7, wherein the retainer (10) completely surrounds the side-elements (5a, 5b, 5c) in their compressed storage state.
9. The repository of any of aspects 3 to 8, wherein the retainer (10) has a closure (14; 15) for locking the side-elements (5a, 5b, 5c) in their compressed storage state.
10. The repository of aspect 9, wherein the closure comprises a latch mechanism (14) or a pneumatic closing mechanism.
11. The repository of aspect 9, wherein the closure comprises a magnet (15).
12. The repository of any of the preceding aspects, wherein the thickness of the material forming the side-elements (5a, 5b, 5c) is between 10 µm and 100 µm, preferably between 15 µm and 50 µm and more preferably between 20 µm and 30 µm.
13. The repository of any of the preceding aspects, wherein the material forming the side-elements (5a, 5b, 5c) comprises one or a combination of metal, steel, stainless steel, plastics, polycarbonate, fabric, and paper.
14. The repository of any of the preceding aspects, wherein each of the side-elements (5a, 5b, 5c) comprises at least 20, preferably at least 40, more preferably at least 60, even more preferably at least 80 and most preferably at least 100 folds (6, 7) in total.
15. The repository of any of the preceding aspects, wherein at least some, preferably all, of the inwardly oriented folds (7) are connected to each other by support elements.
16. The repository of aspect 15, wherein the support elements consist of the same material as the side-elements (5a, 5b, 5c).
17. The repository of any of the preceding aspects, wherein the repository (1) further comprises one or more ceramic data carriers (2) removably stored in the repository.
18. The repository of aspect 17, wherein each of the one or more ceramic data carriers (2) is arranged between and supported by two opposing folds (6, 7) of the side-elements (5a, 5b).
19. The repository of aspect 17 or 18, wherein the ratio between the thickness of each ceramic data carrier (2) and the thickness of the material forming the side-elements (5a, 5b, 5c) is at least 4, preferably at least 6, more preferably at least 8.
20. The repository of any of aspects 17 to 19, wherein the maximum distance between two opposing outwardly extending folds (6) defines a first length and wherein the width of the ceramic data carrier (2) defines a second length and wherein the ratio between the first length and the second length is at least 1.02, preferably at least 1.05, more preferably at least 1.1.
21. The repository of any of the preceding aspects, wherein the maximum distance between two opposing outwardly extending folds (6) defines a first length and wherein the distance between the tip of an outwardly extending fold (6) and the tip of an adjacent inwardly extending fold (7) in the compressed storage state defines a second length and wherein the ratio between the first length and the second length is at least 2, preferably at least 5, more preferably at least 8 and most preferably at least 10 and/or wherein the ratio between the first length and the second length is at most 40, preferably at most 30, more preferably at most 20 and most preferably at most 15.
22. The repository of any of the preceding aspects, wherein the repository has a spring constant and wherein the spring constant is between 0.1 N/m and 10 N/m, preferably between 0.2 N/m and 5 N/m, more preferably between 0.5 N/m and 2 N/m and most preferably between 0.8 N/m and 1.2 N/m.
23. A method for storing a ceramic data carrier (2) in the repository (1) of any of the preceding aspects, wherein the method comprises:
   expanding the side-elements (5a, 5b, 5c) from their compressed storage state into their expanded working state;
   placing a ceramic data carrier (2) between two opposing folds (6, 7) of the side-elements (5a, 5b, 5c) such that the ceramic data carrier (2) is supported by the two opposing folds (6, 7) of the side-elements (5a, 5b, 5c); and
   compressing the side-elements (5a, 5b, 5c) from their expanded working state into their compressed storage state, wherein the ceramic data carrier (2) remains to be supported by the two opposing folds (6, 7) of the side-elements (5a, 5b, 5c).
24. The method of aspect 23, further comprising:
   again expanding the side-elements (5a, 5b, 5c) from their compressed storage state into their expanded working state;
   removing a ceramic data carrier (2) from the repository (1); and
   again compressing the side-elements (5a, 5b, 5c) from their expanded working state into their compressed storage state.
25. The method of aspect 24, further comprising:
   manipulating the ceramic data carrier (2) or reading out information from the ceramic data carrier (2);
   again expanding the side-elements (5a, 5b, 5c) from their compressed storage state into their expanded working state;
   returning the manipulated ceramic data carrier (2) between two opposing folds (6, 7) of the side-elements (5a, 5b, 5c) such that the ceramic data carrier (2) is supported by the two opposing folds (6, 7) of the side-elements (5a, 5b, 5c); and
   again compressing the side-elements (5a, 5b, 5c) from their expanded working state into their compressed storage state.
26. The method of aspect 23, 24 or 25, further comprising, before expanding the side-elements from their compressed storage state into their expanded working state, placing the repository into a guide which stabilizes the side-elements during expansion.
27. The method of any of aspects 23 to 26, further comprising, before placing or returning a ceramic data carrier between two opposing folds of the side-elements and/or before removing a ceramic data carrier from the repository, pulling the two side-elements apart from each other, preferably by means of a magnet.

Preferred embodiments of the present invention will now be further elucidated with reference to the Figures, which show:
Fig. 1A a cross-section (top view) and a top view (bottom view) of a preferred embodiment of a repository according to the present invention together with a guide, wherein the repository is in its compressed storage state;
Fig. 1B a cross-section (top view) and a top view (bottom view) of the repository according to Fig. 1A, in the expanded working state;
Fig. 2A a cross-section (top view) and a top view (bottom view) of another preferred embodiment of the repository according to the present invention in its compressed storage state;
Fig. 2B a cross-section (top view) and a top view (bottom view) of the repository according to Fig. 2A, in its expanded working state;
Fig. 3A a perspective view of another preferred embodiment of the repository according to the present invention;
Fig. 3B a perspective view of the components of the repository according to Fig. 3A;
Fig. 3C a perspective view of the components of another preferred embodiment of a repository according to the present invention;
Fig. 4A a perspective view of the components of another preferred embodiment of a repository according to the present invention;
Fig. 4B the repository according to Fig. 4A in its assembled state;
Fig. 5A a perspective view of the components of another preferred embodiment of a repository according to the present invention;
Fig. 5B a perspective view of the repository of Fig. 5A in its assembled state;
Fig. 6A a cross-section of a preferred embodiment of a retainer in its opened state;
Fig. 6B a cross-section through the container of Fig. 6A in its closed state;
Fig. 6C an enlarged detail of Fig. 6B;
Fig. 6D an enlarged detail of Fig. 6A;
Fig. 7A a cross-section through another preferred embodiment of the retainer in its closed state;
Fig. 7B a cross-section through the retainer of Fig. 7A in its opened state;
Fig. 8A a cross-section through another preferred embodiment of the retainer in its opened state;
Fig. 8B a cross-section through the retainer of Fig. 8A in its closed state;
Fig. 9 a schematic drawing illustrating the expansion of the inventive repository;
Fig. 10A a cross-section through another preferred embodiment of the repository according to the present invention in its expanded working state;
Fig. 10B a cross-section through the repository according to Fig. 10A, together with a spacer; and
Fig. 11 a cross-section through the repository of Fig. 10B, together with a magnet.

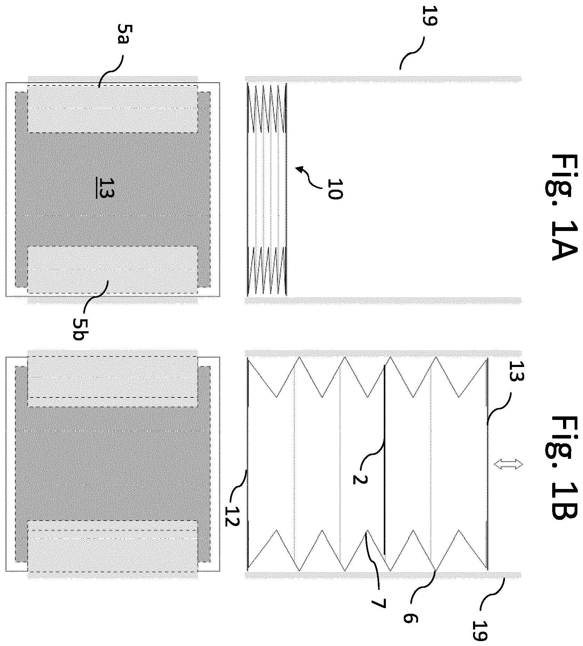

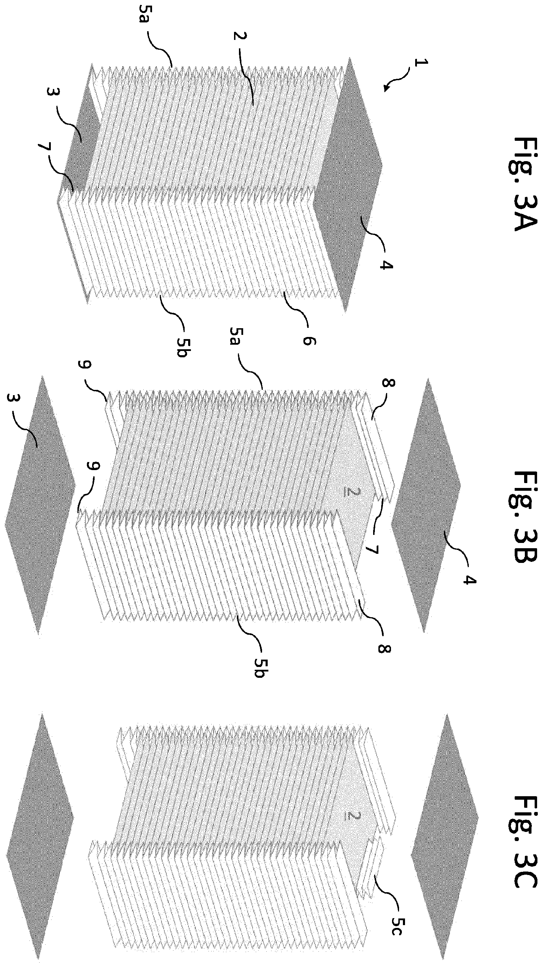

Figs. 3A and 3B show a preferred embodiment of a repository 1 according to the present invention, both in its assembled state (see Fig. 3A) as well as in its disassembled state (see Fig. 3B) showing the respective components of the repository 1. The repository 1 comprises a bottom element 3, a top element 4 and at least two side-elements 5a and 5b extending between the bottom element 3 and the top element 4. Each of the side-elements 5a and 5b comprises outwardly oriented folds 6 and inwardly oriented folds 7 (see also Fig. 1B) allowing for a compressed storage state (see Fig. 1A) and an expanded working state (see Fig. 1B) of the side-elements 5a and 5b. The repository 1 is adapted for storing ceramic data carriers 2 which are each arranged between and supported by two opposing folds of the side-elements 5a and 5b.

In their compressed storage state, which is shown in Fig. 1A, each outwardly oriented fold 6 encompasses one ceramic data carrier 2, which is sandwiched between two adjacent inwardly oriented folds 7. Each of the inwardly oriented folds 7 is sandwiched between two adjacent data carriers 2, if the repository 1 is completely filled with ceramic data carriers 2. In this compressed storage state, the filled repository forms a dense package having a height, which in essence corresponds to the sum of the thicknesses of all data carriers 2, the sum of all thicknesses of the inwardly oriented folds 7 and the thicknesses of the bottom element 3 and the top element 4. Preferably, the ratio between the height of the repository in its compressed storage state on the one hand and the sum of all these thicknesses on the other hand is smaller than 1.1, preferably smaller than 1.05, and even more preferably smaller than 1.02.

As will be evident, it is difficult to access a single data carrier 2 in such a dense stack as shown in Fig. 1A. Thus, in order to access one or more of the data carriers 2, the side-elements 5a and 5b of the repository 1 may be expanded into their expanded working state shown in Fig. 1B. For this purpose, the top element 4 (not shown in Fig. 1B), may be lifted from the bottom element 3 (not shown in Fig. 1B), as schematically indicated by the double arrow shown in Fig. 1B. During expansion, the ceramic data carriers 2 remain to be supported by two opposing folds of the side-elements, respectively, as shown in Fig. 1B. Due to the compressed folds, adjacent data carriers 2 are not sufficiently spaced apart from each other to allow for gripping a predetermined data carrier 2 either manually or by means of a robot. Thus, the expanded working state shown in Fig. 1B allows for easy access of each or all of the data carriers 2.

Preferably, the expanded working state of the repository is defined by an opening ankle of the outwardly oriented folds 6 of at least 20°, preferably at least 30°, even more preferably at least 40°.

In the expanded working state, the ratio between the distance between adjacent data carriers 2 and the thickness of a single data carrier 2 amounts to preferably at least two, more preferably at least five and most preferably at least ten.

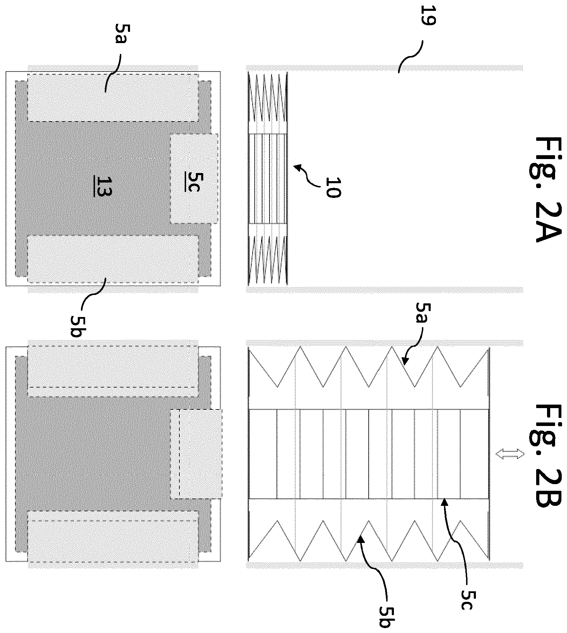

In order to stabilize the entire repository and/or to better support each of the ceramic data carriers 2, a third side-element 5c may be present on a third side of the repository as shown in Fig. 3C. Preferably, the third side-element 5c is provided with outwardly oriented folds 6 and inwardly oriented folds 7 as the two other side-elements 5a and 5b. However, the third side-element 5c need not extend along the entire width of the data carriers 2. Rather, it is preferred that the two edges of the third side-element 5c are distanced form the first and second side-elements 5a and 5b, as shown in Fig. 3C. Such a repository 1 with a third side-element 5c is also shown in Figs. 2A and 2B.

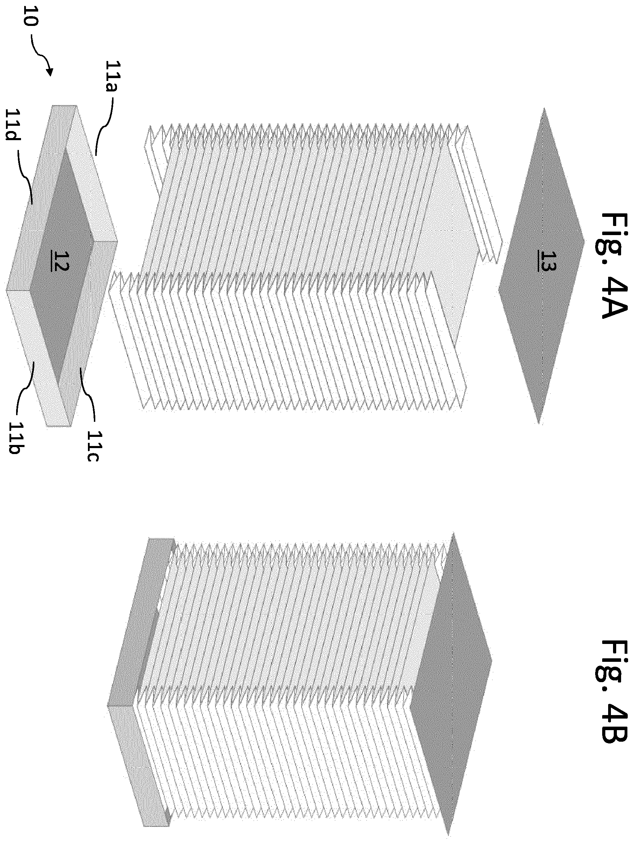

The repository 1 may further comprise a retainer 10 for receiving the side-elements 5a and 5b (and optionally the third side-element 5c) in their compressed storage state. A first example of such a retainer 10 is shown in Figs. 4A and 4B. Said retainer 10 has four side walls 11a, 11b, 11c and 11d encompassing the side-elements 5a and 5b in their compressed storage state. The retainer 10 of Figs. 4A and 4B further has a bottom 12 and a cover 13. A low end 9 of each side wall 5a and 5b, is connected to the bottom 12 of the retainer 10 and an upper end 8 of each side wall (5a, 5b) is connected to the cover 13 of the retainer 10. In other words, in the preferred embodiment shown in Figs. 4A and 4B the bottom element 3 (see Fig. 3A) is integral with the bottom 12 of the retainer 10 and the top element 4 is integral with the cover 13 of the retainer 10. Alternatively, the bottom element 3 may be attached to the bottom 12 of the retainer 10 and/or the top element 4 may be attached to the cover 13 of the retainer 10.

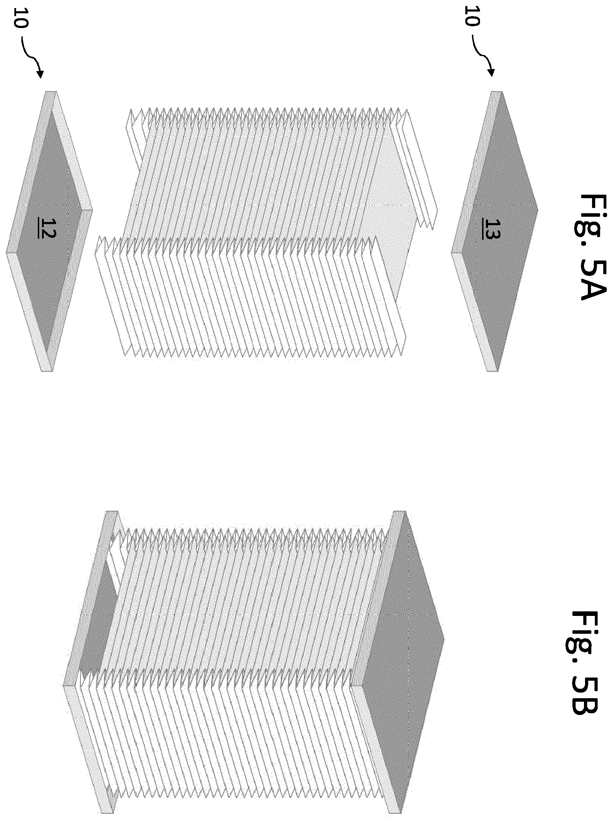

The side walls 11a, 11b, 11c and 11d of the retainer 10 may be provided only at the bottom 12, as shown in Figs. 4A and 4B, or only at the top 13 (not shown) or both at the bottom 12 and at the top 13, as shown in Figs. 5A and 5B.

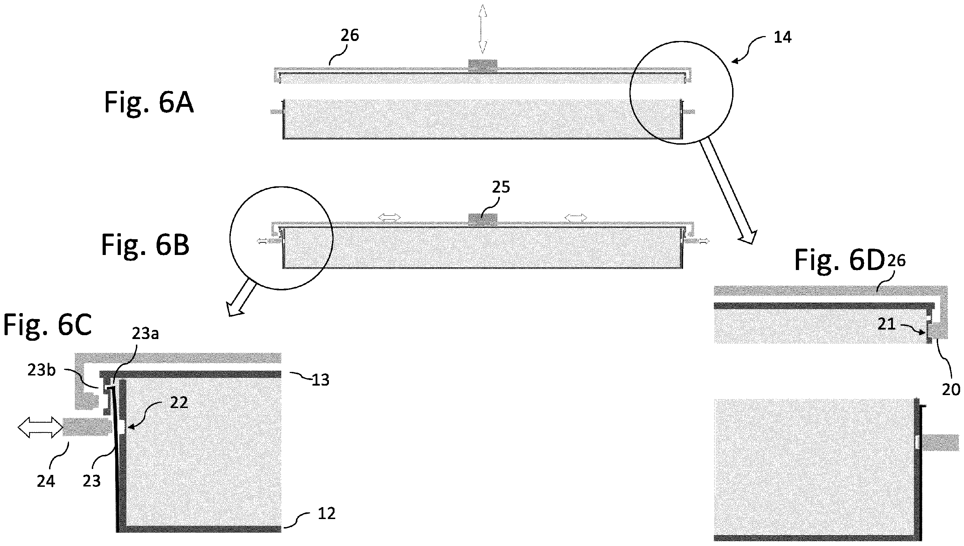

The retainer 10 preferably has a closure for locking the side-elements 5a and 5b in their compressed storage state. An exemplary closure comprising a latch mechanism 14 is shown in Figs. 6A-6D. The latch mechanism 14 may comprise a spring-like element 23 having a protrusion 23a which engages with a corresponding groove 23b. Due to this engagement, the cover 13 may no longer be removed from the bottom 12 of the retainer. This is only possible if pressure is exerted onto the two bolts 24. If these two bolts 24 are moved inwardly as indicated by the double arrows in Fig. 6B and 6C, the spring-like element 23 is disengaged from the groove 23b and the top 13 may again be removed from the bottom 12 of the retainer 10.

Figs. 6A-6D further show a mechanism for automatically opening the retainer 10 by means of a grappler 26. Said grappler 26 may be expanded and compressed horizontally by means of a spring mechanism 25 as indicated by the two double arrows in Fig. 6B. The grappler 26 also comprises two protrusions 20 which can engage with corresponding grooves 21 provided in the side walls of the retainer (see Fig. 6C and 6D). Once the protrusions 20 have engaged with the corresponding grooves 21, the grappler 26 may move the top 13 of the retainer 10 in an upwards direction as shown in Fig. 6A.

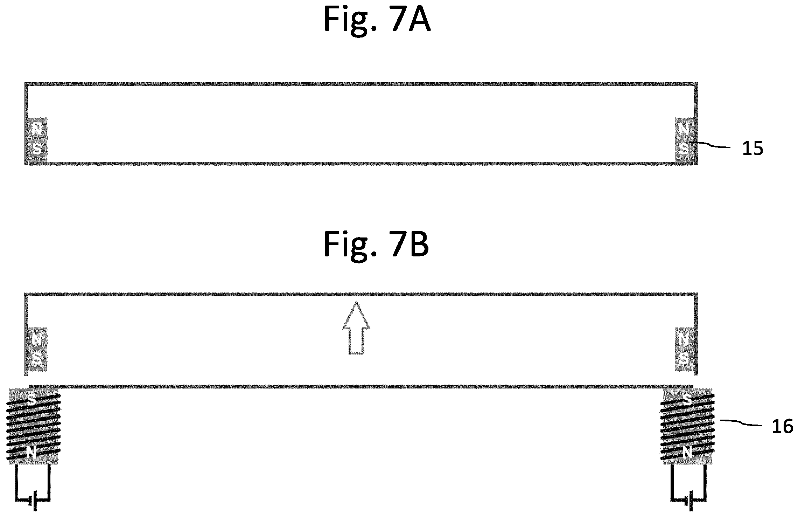

An alternative closure mechanism utilizing magnetic forces is shown in Figs. 7A and 7B. One ore more magnets 15 may be provided within the retainer 10 as shown in Fig. 7A. If the bottom 12 or the retainer 10 is magnetic, the magnetic forces between the bottom 12 and the magnet 15 will maintain the retainer 10 in its closed state. In order to open the retainer 10, the bottom 12 will have to be moved downwards with a force exceeding the magnetic force between the bottom 12 and the magnet 15. This may be achieved by simply applying a mechanic or pneumatic force to the bottom 12. Alternatively, additional electromagnets 16 may be utilized to open the retainer as schematically shown in Fig. 7B.

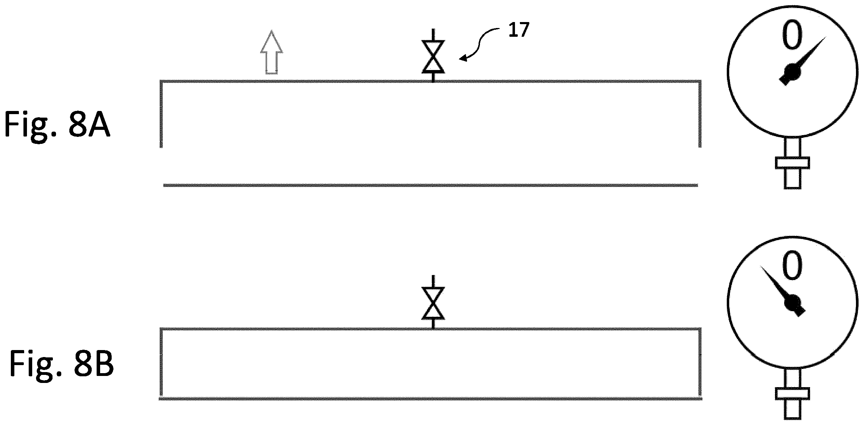

According to a further option, the retainer 10 may be maintained in its closed state by means of an underpressure being present within the retainer 10. This is schematically shown in Figs. 8A and 8B. For this purpose, the retainer 10 should comprise one or more valves 17 to create a vacuum or sufficient underpressure within the retainer 10. Of course, a sealing will be necessary between the bottom 12 and the side walls of the retainer in order to maintain the underpressure in the retainer.

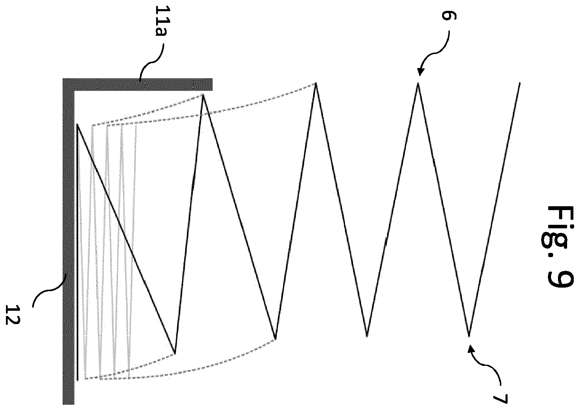

Preferably, the side-elements and their folds are provided in such a manner that expanding the side-elements automatically increases the distance between opposing folds as schematically shown in Fig. 9. For example, if the bottom-most outwardly oriented fold 6 is attached to the bottom 12 as shown in Fig. 9, said fixed fold 6 defines an axis of rotation which leads, accordingly, to an outward rotation of the side-walls.

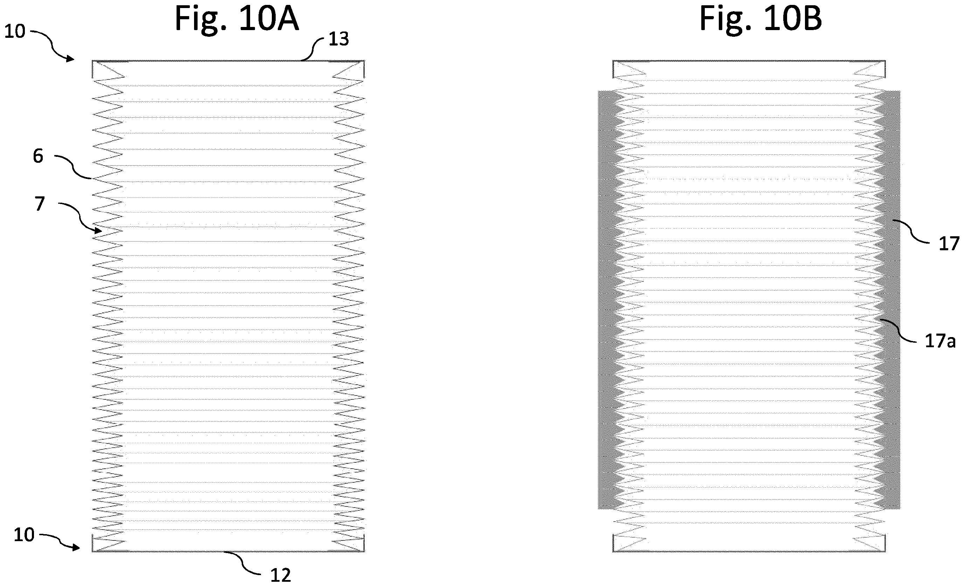

In order to stabilize the side-elements during expansion it is further preferred to place the repository 1 into a guide 19 (see Figs. 1A and 1B) before expanding the side-elements from their compressed storage state into their expanded working state. This guide 19 may comprise, for example, two rails or guide elements which allow for the outwardly oriented folds 6 to slide along those rails. This ensures a parallel expansion of the retainer which guarantees a stable support of each of the ceramic data carriers 2 as shown in Figs. 1A and 1B. A perfect alignment of each of the data carriers 2 may also be achieved by means of spacer elements 17 shown in Fig. 10B. The spacer element 17 may comprise several protrusions 17a which, at least partially, extend into the inwardly oriented folds 7, as shown in Fig. 10B. Accordingly, each of the outwardly extending folds 6 of the two side-elements 5a and 5b has a well-defined position and height which eases automatic access of each of the data carriers 2.

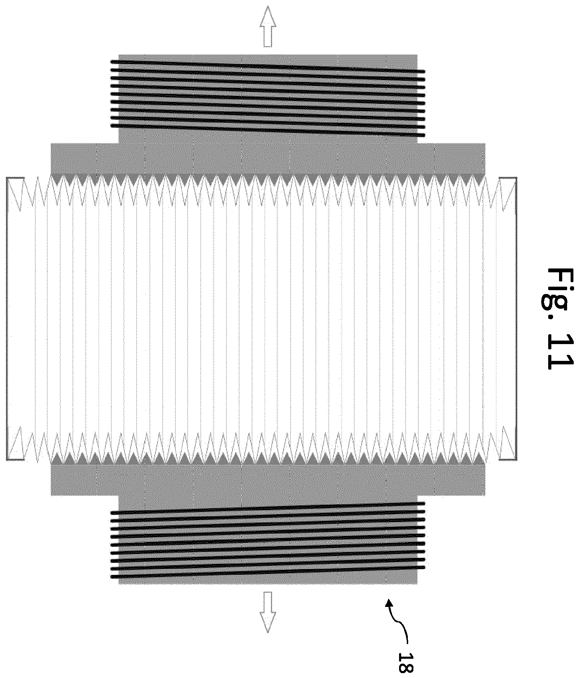

If the ceramic data carriers 2 are clamped between opposing folds to such an extent that removing a data carrier from the repository may be difficult due to, e.g., frictional forces, opposing folds may be displaced from each other by applying magnetic forces, as schematically shown in Fig. 11. For example, if the side-elements 5a and 5b consist of a magnetic material, an electromagnet 18 may be placed adjacent to the spacer element 17 in order to attract each of the side-elements 5a and 5b towards the spacer elements 17.

## Claims

1. A repository (1) for ceramic data carriers (2), the repository (1) comprising a bottom element (3), a top element (4) and at least two side-elements (5a, 5b, 5c) extending between the bottom element (3) and the top element (4), wherein each of the side-elements (5a, 5b, 5c) comprises outwardly oriented folds (6) and inwardly oriented folds (7) allowing for a compressed storage state and an expanded working state of the side-elements (5a, 5b, 5c).

2. The repository of claim 1, wherein the repository (1) further comprises a retainer (10) for receiving the side-elements (5a, 5b, 5c) in their compressed storage state, wherein the retainer (10) preferably has at least two side-walls (11a, 11b) covering the side-elements (5a, 5b, 5c) in their compressed storage state, wherein the retainer more preferably has four side-walls (11a, 11b, 11c, 11d) encompassing the side-elements (5a, 5b, 5c) in their compressed storage state.

3. The repository of claim 2, wherein the retainer (10) has a bottom (12) and/or a cover (13) and wherein a lower end (9) of each side-wall (5a, 5b, 5c) is connected to the bottom (12) of the retainer (10) and/or an upper end (8) of each side-wall (5a, 5b, 5c) is connected to the cover (13) of the retainer (10).

4. The repository of any of claims 2 to 3, wherein the retainer (10) has a closure (14; 15) for locking the side-elements (5a, 5b, 5c) in their compressed storage state.

5. The repository of any of the preceding claims, wherein each of the side-elements (5a, 5b, 5c) comprises at least 20, preferably at least 40, more preferably at least 60, even more preferably at least 80 and most preferably at least 100 folds (6, 7) in total.

6. The repository of any of the preceding claims, wherein the repository (1) further comprises one or more ceramic data carriers (2) removably stored in the repository, wherein each of the one or more ceramic data carriers (2) is arranged between and supported by two opposing folds (6, 7) of the side-elements (5a, 5b).

7. The repository of claim 6, wherein the ratio between the thickness of each ceramic data carrier (2) and the thickness of the material forming the side-elements (5a, 5b, 5c) is at least 4, preferably at least 6, more preferably at least 8.

8. The repository of any of claims 6 to 7, wherein the maximum distance between two opposing outwardly extending folds (6) defines a first length and wherein the width of the ceramic data carrier (2) defines a second length and wherein the ratio between the first length and the second length is at least 1.02, preferably at least 1.05, more preferably at least 1.1.

9. The repository of any of the preceding claims, wherein the maximum distance between two opposing outwardly extending folds (6) defines a first length and wherein the distance between the tip of an outwardly extending fold (6) and the tip of an adjacent inwardly extending fold (7) in the compressed storage state defines a second length and wherein the ratio between the first length and the second length is at least 2, preferably at least 5, more preferably at least 8 and most preferably at least 10 and/or wherein the ratio between the first length and the second length is at most 40, preferably at most 30, more preferably at most 20 and most preferably at most 15.

10. The repository of any of the preceding claims, wherein the repository has a spring constant and wherein the spring constant is between 0.1 N/m and 10 N/m, preferably between 0.2 N/m and 5 N/m, more preferably between 0.5 N/m and 2 N/m and most preferably between 0.8 N/m and 1.2 N/m.

11. A method for storing a ceramic data carrier (2) in the repository (1) of any of the preceding claims, wherein the method comprises:
expanding the side-elements (5a, 5b, 5c) from their compressed storage state into their expanded working state;
placing a ceramic data carrier (2) between two opposing folds (6, 7) of the side-elements (5a, 5b, 5c) such that the ceramic data carrier (2) is supported by the two opposing folds (6, 7) of the side-elements (5a, 5b, 5c); and
compressing the side-elements (5a, 5b, 5c) from their expanded working state into their compressed storage state, wherein the ceramic data carrier (2) remains to be supported by the two opposing folds (6, 7) of the side-elements (5a, 5b, 5c).

12. The method of claim 11, further comprising:
again expanding the side-elements (5a, 5b, 5c) from their compressed storage state into their expanded working state;
removing a ceramic data carrier (2) from the repository (1); and
again compressing the side-elements (5a, 5b, 5c) from their expanded working state into their compressed storage state.

13. The method of claim 12, further comprising:
manipulating the ceramic data carrier (2) or reading out information from the ceramic data carrier (2);
again expanding the side-elements (5a, 5b, 5c) from their compressed storage state into their expanded working state;
returning the manipulated ceramic data carrier (2) between two opposing folds (6, 7) of the side-elements (5a, 5b, 5c) such that the ceramic data carrier (2) is supported by the two opposing folds (6, 7) of the side-elements (5a, 5b, 5c); and
again compressing the side-elements (5a, 5b, 5c) from their expanded working state into their compressed storage state.

14. The method of claim 11, 12 or 13, further comprising, before expanding the side-elements from their compressed storage state into their expanded working state, placing the repository into a guide which stabilizes the side-elements during expansion.

15. The method of any of claims 11 to 14, further comprising, before placing or returning a ceramic data carrier between two opposing folds of the side-elements and/or before removing a ceramic data carrier from the repository, pulling the two side-elements apart from each other, preferably by means of a magnet.
